# FASCICULE DE BREVET EUROPEEN

(11) **EP 3 476 018 B1**
(45) Date de publication et mention de la délivrance du brevet: **20.04.2022**
(21) Numéro de dépôt: 17742813.3
(22) Date de dépôt: 26.06.2017
(51) Int. Cl.: H02H 7/122, H02H 3/02, H02H 3/05

(54) **PROCÉDÉ DE GÉNÉRATION D'UN COURANT DE COURT-CIRCUIT POUR LE DÉCLENCHEMENT D'UN ÉLÉMENT DE PROTECTION ÉLECTRIQUE**
VERFAHREN ZUR ERZEUGUNG EINES KURZSCHLUSSSTROMS ZUM AUSLÖSEN EINES ELEKTRISCHEN SCHUTZELEMENTS
METHOD FOR GENERATING A SHORT-CIRCUIT CURRENT FOR TRIGGERING AN ELECTRICAL PROTECTION ELEMENT

(30) Priorité: 28.06.2016 FR 1656032
(43) Date de publication de la demande: 01.05.2019
(73) Titulaire: Socomec, 67230 Benfeld (FR)
(72) Inventeur: BOOS, Pascal, 67118 Geispolsheim (FR)
(74) Mandataire: Cabinet Beau de Loménie
(86) Numéro de dépôt international: PCT/FR2017/051696
(87) Numéro de publication internationale: WO 2018/002501

(56) Documents cités:
- EP-A1- 1 580 873
- US-B2- 9 019 674

## Description

### Arrière-plan de l'invention

L'invention concerne une alimentation sans interruption, et plus particulièrement un procédé de génération par le dispositif d'alimentation sans interruption d'un courant de court-circuit destiné à déclencher un dispositif de protection se trouvant dans l'installation alimenté par le dispositif d'alimentation sans interruption.

Une alimentation sans interruption (ASI) ou alimentation statique sans coupure (ASSC), également connue en anglais sous la dénomination « Uninterruptible Power System » ou UPS, est un dispositif électronique de puissance qui permet de fournir un courant alternatif stable et dépourvu de coupure ou de micro-coupure, quoi qu'il se produise sur le réseau électrique.

Les ASI sont généralement utilisées pour fournir de l'énergie électrique à des bâtiments tels que des centres de données ou « data center » en anglais, comme par exemple des centres d'hébergement de données ou des sites industriels.

Le terme onduleur, ou « inverter » en anglais, est fréquemment utilisé, par abus de langage, pour désigner l'ensemble du dispositif. C'est le cas, par exemple, pour les onduleurs que l'on intercale entre le réseau de distribution et les serveurs d'un centre informatique.

Une ASI est constituée d'un convertisseur de tension alternative en tension continue appelé redresseur, d'un dispositif de stockage d'énergie tel qu'une batterie d'accumulateurs ou des supercondensateurs, et d'un convertisseur produisant une tension alternative à partir d'une tension continue qu'on appelle aussi onduleur et fonctionnant à fréquence fixe.

Les différents convertisseurs électriques de puissance d'une ASI sont commandés par des dispositifs électroniques de puissance et des programmes embarqués.

Un court-circuit d'une charge connectée à une borne de sortie de l'ASI peut être une des causes d'une mise en défaut de la distribution électrique d'une ASI. Pour isoler les différentes situations de mises en défaut de la distribution électrique d'une ASI lorsqu'elles apparaissent, différents éléments de protection tels que des fusibles ou des disjoncteurs sont montés entre l'ASI et la charge.

Pour déclencher ces éléments de protection le plus vite possible à compter de l'apparition d'un défaut, l'ASI doit fournir une énergie aussi grande que possible dès l'instant de l'apparition du défaut. Autrement dit, l'énergie que doit délivrer l'ASI et qui correspond au produit du carré du courant avec le temps, i²t, doit être maximisée jusqu'au déclenchement de la protection. Ce pic d'énergie généré par un pic de courant est destiné à déclencher le circuit de protection monté entre la charge et l'ASI, c'est-à-dire à isoler le défaut de la charge. Plus précisément, le pic de courant est destiné à faire fondre, et ainsi ouvrir, le fusible ou bien à déclencher le disjoncteur, ou plus généralement le dispositif de déconnection électrique, en amont du défaut.

La principale difficulté relative à la génération d'un courant de court-circuit est de fournir un tel courant tout en restant dans des conditions thermiques supportables pour l'onduleur, c'est-à-dire des conditions thermiques évitant toute dégradation des autres éléments de l'onduleur comme les semi-conducteurs.

En effet, tout le circuit électrique étant parcouru par un courant de court-circuit ayant une amplitude très élevé, les différents composants électriques du circuit chauffent en réponse à ce courant.

De plus, tous les composants électriques ne peuvent pas supporter la même intensité maximale du courant les traversant.

Chaque composant présente donc des caractéristiques limites, et notamment une intensité, ou amplitude, limite de courant au-delà de laquelle le composant est endommagé quel que soit le temps pendant lequel cette intensité est appliquée, et une température limite au-delà de laquelle le composant électrique risque de subir des dommages.

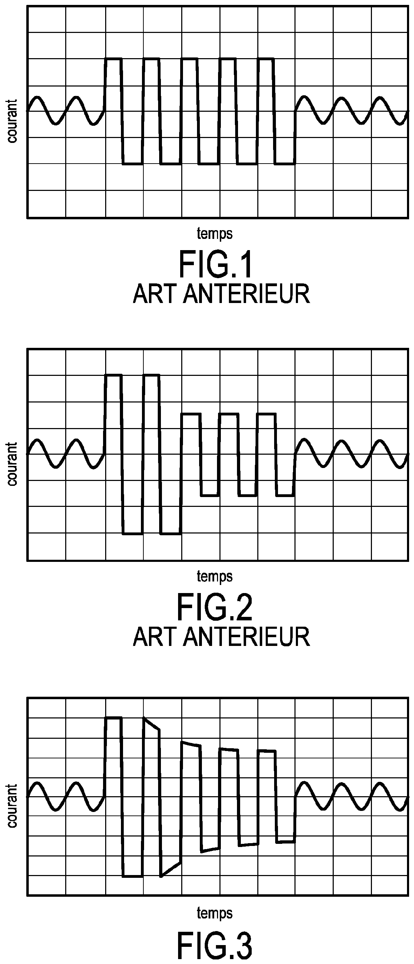

Une solution classique consiste à fournir un courant alternatif carré ayant la même fréquence que le signal de tension délivré en temps normal, c'est-à-dire lorsqu'aucun défaut n'est présent. Ce courant, dont un exemple est illustré sur la figure 1, présente une amplitude fixe pendant toute la durée du défaut, avec une durée d'application de ce courant ne dépassant pas les conditions thermiques limites de l'ASI, c'est-à-dire une durée d'application permettant d'éviter que la température des composants ne dépasse leur température limite admissible.

Une seconde solution connue consiste à fournir un courant alternatif carré présentant une première amplitude pendant une première plage temporelle et une seconde amplitude distincte de la première amplitude pendant une seconde plage temporelle suivant la première plage temporelle, comme cela est illustré sur la figure 2 qui présente un exemple de signal alternatif selon la seconde solution connue.

Dans les premiers instants de génération du courant alternatif carré, c'est-à-dire sur la première plage temporelle, le courant alternatif carré présente une première amplitude plus élevée que l'amplitude fixe du signal de la solution classique illustrée sur la figure 1. Sachant que l'énergie délivrée par le courant correspond au produit du carré de l'intensité par la durée d'application du courant, soit i2t, l'énergie fournie durant les premiers instants, c'est-à-dire sur la première plage temporelle, est plus importante que dans la solution classique de la figure 1 présentée précédemment. La majorité des situations de défaut sera écarté au cours de ces premiers instants, c'est-à-dire que pour une majorité des cas les dispositifs de protection tels que les disjoncteurs ou les fusibles se déclencheront au cours de cette première étape.

Dans les instants suivants les premiers instants, c'est-à-dire sur la seconde plage temporelle directement successive à la première plage temporelle, le courant fourni est abaissé à une valeur non nulle permettant de respecter les conditions thermiques limites des composants de l'ASI, c'est-à-dire que le courant présente une seconde amplitude inférieure à la première amplitude et inférieure à l'amplitude fixe du signal de la solution classique illustrée sur la figure 1. Cette seconde plage temporelle présente généralement une utilité dans le cas où des coupe-circuits ou disjoncteurs à déclenchement retardé sont utilisés, ou encore dans le cas où des fusibles sont à la limite de la fusion.

Les deux solutions connues présentées ci-dessus ne permettent pas cependant d'utiliser toute la capacité disponible de l'ASI pour la protection des défauts électriques. Le document US9019674 divulgue la technique de générer un court-circuit pour protéger une installation électrique.

Il est connu du document EP 1 580 873 un dispositif comportant un circuit de commande pour commander des semi-conducteurs de puissance afin de fournir une tension pulsée provenant d'une source d'alimentation à une charge électrique connectée à un convertisseur.

### Objet et résumé de l'invention

L'invention, telle que définie par les revendications 1 et 7, vise à offrir un procédé permettant de maximiser l'intensité d'un courant de court-circuit délivré par un dispositif d'alimentation de puissance jusqu'au déclenchement d'un élément de protection tout en régulant l'amplitude du courant de court-circuit au court du temps en fonction de l'inertie thermique des composants électriques du dispositif d'alimentation de puissance.

Dans un objet de l'invention, il est proposé un procédé de génération d'un courant de court-circuit par un dispositif d'alimentation de puissance comportant des composants électriques pour provoquer le déclenchement d'un élément de protection raccordé entre une charge et ledit dispositif d'alimentation de puissance.

Selon une caractéristique générale de l'invention, en réponse à la détection d'une situation de défaut électrique dans le dispositif d'alimentation de puissance, on génère un courant de court-circuit alternatif ayant :
- pour une première période dudit signal une amplitude de courant égale à l'amplitude maximale de courant supportable par les composants électriques dudit dispositif d'alimentation, et
- pour les périodes suivantes, une amplitude de courant décroissante en fonction de l'inertie thermique desdits composants électriques.

Le procédé permet ainsi, d'une part, de fournir un courant de court-circuit dont l'amplitude est la plus grande possible à l'instant où le défaut est détecté et ainsi optimiser les chances de déclenchement de l'élément de protection dès les premiers instants suivant la détection du défaut électrique, et, d'autre part, de continuellement maximiser l'énergie délivrée au court du temps par le courant de court-circuit jusqu'à ce que le défaut soit isolé du circuit, c'est-à-dire jusqu'à ce que l'élément de protection se déclenche.

La dépendance de la décroissance de l'amplitude du signal alternatif du courant de court-circuit en fonction de l'inertie thermique des composants du dispositif d'alimentation de puissance permet d'ajuster la forme du signal de courant au mieux par rapport aux conditions thermiques limites des composants du dispositif d'alimentation de puissance et ainsi d'utiliser toutes les performances disponibles du dispositif d'alimentation de puissance. Cela permet notamment, dans le cas où l'élément de protection est un fusible, de délivrer le maximum d'énergie calorifique possible dès les premiers instants pour faire fondre le fusible le plus vite possible et ainsi isoler le dispositif d'alimentation de puissance de la charge le plus tôt possible après la détection de la situation de mise en défaut.

Chaque composant peut imposer une limite relative à l'amplitude de courant maximale applicable et/ou une limite par rapport à la température limite qu'il peut supporter.

La forme du signal de courant de court-circuit fournie par le procédé selon l'invention permet ainsi de fournir une valeur maximale de courant de court-circuit plus importante que celle des deux solutions connues exposées ci-avant et de fournir une quantité d'énergie, correspondant au produit i²t, plus importante qu'avec les deux solutions connues exposées ci-avant. Et cela sans avoir recours à un surdimensionnement de l'onduleur.

Selon l'inertie thermique des composants électriques du dispositif d'alimentation de puissance, les périodes suivant directement la première période ont une amplitude présentant une amplitude de courant inférieure ou égale à la précédente. Il est donc possible d'avoir l'amplitude maximale de la première période sur plusieurs des premières périodes du courant de court-circuit.

Le signal peut être un signal carré dont l'amplitude peut décroître au cours du temps à partir d'un moment. En d'autres termes, le courant de court-circuit alternatif peut être un signal carré modulé en amplitude en fonction de l'inertie thermique desdits composants électriques.

Le signal peut également avoir toute autre forme de signal alternatif tel qu'un signal sinusoïdal ou un signal triangulaire, le signal pouvant être modulé en amplitude en fonction de l'inertie thermique desdits composants électriques.

L'avantage d'un signal carré par rapport à tout autre signal alternatif est que la quantité de courant délivré sur une période est maximisée par rapport aux autres formes de signal alternatif, c'est-à-dire que sur une demie période l'intégrale du courant est supérieur à l'intégrale du courant pour un signal alternatif ou un signal triangulaire. En d'autre termes, une forme de signal carré permet de maximiser l'énergie délivrée au court du temps par le courant de court-circuit par rapport à toute autre forme de signal alternatif.

Selon un premier mode de mise en œuvre du procédé de génération d'un courant de court-circuit, lesdites périodes suivantes du signal de court-circuit alternatif peuvent présenter une forme de pseudo-signal carré avec des fronts montants et descendants et des extrema présentant une forme décroissante entre deux fronts en fonction de l'inertie thermique desdits composants électriques.

La forme du signal de courant de court-circuit fournie par le procédé selon l'invention est ainsi encore plus ajustée en fonction de l'inertie thermique des composants pour fournir une valeur maximale de courant de court-circuit et une quantité d'énergie encore plus importantes.

En effet, pour les périodes au-delà de la première période, non seulement l'amplitude du signal de courant décroit successivement d'une période à une autre, mais dans une même période du signal, les sommets du pseudo-signal carré présentent non pas une valeur constante, mais une valeur absolue décroissante entre le front montant et le front descendant de la période pour le sommet positif et une valeur absolue décroissante entre le front descendant et le front montant suivant de la période.

En d'autre termes, le courant de court-circuit alternatif peut être un signal carré dont l'amplitude est modulée en fonction de l'inertie thermique desdits composants électriques et dont la valeur du courant entre deux fronts est également modulée en fonction de l'inertie thermique desdits composants électriques.

Selon un deuxième mode de mise en œuvre du procédé de génération d'un courant de court-circuit, avant la génération du courant de court-circuit, le procédé peut comprendre un accès à une mémoire comprenant une cartographie du courant de court-circuit à générer pour déclencher l'élément de protection.

Selon un troisième mode de mise en œuvre du procédé de génération d'un courant de court-circuit, la cartographie peut être préalablement réalisée à partir d'une détermination de la valeur d'intensité maximale de courant supportée par chacun des composants du dispositif d'alimentation de puissance et d'une détermination de l'inertie thermique de chacun desdits composants électriques.

Selon un quatrième mode de mise en œuvre du procédé de génération d'un courant de court-circuit, l'élément de protection peut comprendre un fusible et le déclenchement de l'élément de protection comprendre l'ouverture du fusible.

Selon un cinquième mode de mise en œuvre du procédé de génération d'un courant de court-circuit, la première période dudit signal peut présenter une forme de signal carré.

Dans un autre objet de l'invention il est proposé un dispositif d'alimentation de puissance comprenant des bornes de raccordement à une charge, des bornes de raccordement à un réseau d'alimentation électrique, des composants électriques et une unité de commande de protection configurée pour générer un courant de court-circuit destiné à provoquer le déclenchement d'un élément de protection raccordé entre ladite charge et ledit dispositif d'alimentation de puissance.

Selon une caractéristique générale de l'invention, l'unité de commande de protection est configurée pour délivrer, en réponse à la détection d'une situation de défaut électrique dans le dispositif d'alimentation de puissance, un signal alternatif de courant de court-circuit ayant :
- pour une première période dudit signal une amplitude de courant égale à l'amplitude maximale de courant supportable par les composants électriques dudit dispositif d'alimentation, et
- pour les périodes suivantes, une amplitude de courant décroissante en fonction de l'inertie thermique desdits composants électriques.

Selon un premier mode de réalisation du dispositif d'alimentation de puissance, ledit dispositif peut comprendre en outre une mémoire dans laquelle est enregistrée une cartographie du courant de court-circuit à générer pour déclencher l'élément de protection.

Selon un deuxième mode de réalisation du dispositif d'alimentation de puissance, la cartographie peut être préalablement réalisée à partir d'une détermination de la valeur d'intensité maximale de courant supportée par chacun des composants du dispositif d'alimentation de puissance et d'une détermination de l'inertie thermique de chacun desdits composants électriques.

Selon un troisième mode de réalisation du dispositif d'alimentation de puissance, l'élément de protection peut comprendre un fusible.

### Brève description des dessins.

L'invention sera mieux comprise à la lecture faite ci-après, à titre indicatif mais non limitatif, en référence aux dessins annexés sur lesquels :
- la figure 1 présente un exemple de signal alternatif selon une première solution connue ;
- la figure 2 présente un exemple de signal alternatif selon une seconde solution connue ;
- la figure 3 présente un exemple de signal alternatif généré selon un mode de mise en œuvre du procédé de l'invention ;
- la figure 4 est une représentation graphique comparant l'amplitude du courant de court-circuit en fonction du temps pour les deux solutions classiques des figures 1 et 2 et pour l'exemple de signal généré selon le mode de mise en œuvre de l'invention de la figure 3 ;
- la figure 5 est une représentation graphique comparant l'énergie délivrée par le courant de court-circuit au cours du temps pour les deux solutions classiques des figures 1 et 2 et pour l'exemple de signal généré selon le premier mode de mise en œuvre de l'invention de la figure 3;
- la figure 6 est une représentation graphique comparant l'évolution de la température des composants électriques, et notamment des semi-conducteurs de puissance, de l'ASI au cours du temps pour les deux solutions classiques des figures 1 et 2 et pour l'exemple de signal généré selon le mode de mise en œuvre de l'invention de la figure 3 ;
- la figure 7 représente un ordinogramme d'un procédé de génération d'un courant de court-circuit selon un mode de mise en œuvre de l'invention ;
- la figure 8 présente schématiquement un dispositif d'alimentation de puissance selon un mode de réalisation de l'invention.

### Description détaillée de modes de réalisation

Sur la figure 3 est représenté un exemple de signal alternatif généré selon un mode de mise en œuvre du procédé de l'invention.

La signal de courant de court-circuit est un signal alternatif formé d'une première période présentant une forme de signal carré avec une amplitude de courant égale à l'amplitude maximale de courant supportable par les composants électriques dudit dispositif d'alimentation.

Les périodes suivantes du signal de court-circuit présentent une forme de pseudo-signal carré en ce que les fronts montants et descendants sont très abruptes, mais les sommets présentent une forme décroissante. Les périodes au-delà de la première période présentent donc un signal alternatif avec une amplitude de courant décroissante en fonction de l'inertie thermique desdits composants.

Ainsi, pour les périodes au-delà de la première période, non seulement, l'amplitude du signal de courant décroit successivement d'une période à une autre, mais dans une même période du signal, les sommets du pseudo-signal carré présentent non pas une valeur constante, mais une valeur absolue décroissante entre le front montant et le front descendant de la période pour le sommet positif et une valeur absolue décroissante entre le front descendant et le front montant suivant la période.

Dans une variante, le signal peut avoir une autre forme de signal alternatif tel qu'un signal sinusoïdal ou un signal triangulaire, le signal étant modulé en amplitude en fonction de l'inertie thermique desdits composants électriques à partir de la deuxième période du signal alternatif périodique.

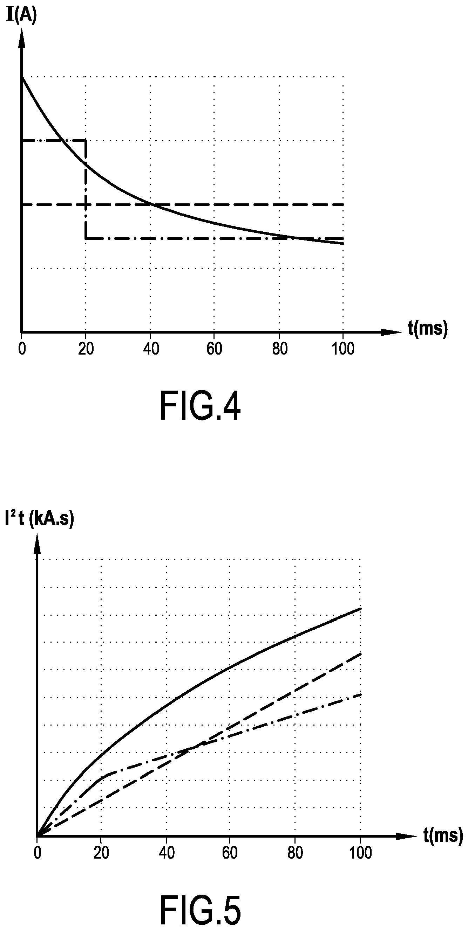

Comme cela est illustré sur la figure 4 qui est une représentation graphique comparant l'amplitude du courant de court-circuit en fonction du temps pour les deux solutions classiques des figures 1 et 2 et pour l'exemple de signal généré selon le mode de mise en œuvre de l'invention de la figure 3, la forme du signal selon l'invention permet d'avoir ainsi une amplitude du courant de court-circuit délivré, et donc une intensité, plus importante durant les premiers instants suivant la détection du défaut, et qui décroit continuellement jusqu'au déclenchement de l'élément de protection.

Sur la figure 4, l'évolution de l'amplitude du courant pour le procédé selon l'invention est représentée en trait plein, l'évolution de l'amplitude du courant selon la solution classique connue de la figure 1 est représentée en pointillés, et l'évolution de l'amplitude du courant selon la seconde solution connue de la figure 2 est représentée en trait mixte.

Comme cela est illustré sur la figure 5 qui est une représentation graphique comparant l'énergie délivrée par le courant de court-circuit au cours du temps pour les deux solutions classiques des figures 1 et 2 et pour l'exemple de signal généré selon le mode de mise en œuvre de l'invention de la figure 3, la forme du signal selon l'invention permet de délivrer, par rapport aux deux solutions connues, une plus grande quantité d'énergie dès la génération du courant de court-circuit et pendant une grande partie du temps ensuite, de 0 à 100 ms notamment, maximisant ainsi les chances de faire fondre le fusible le plus tôt possible ou de déclencher le disjoncteur le plus tôt possible.

Sur la figure 5, l'évolution de l'énergie délivrée par le courant de court-circuit selon l'invention est représentée en trait plein, l'évolution de l'énergie délivrée par le courant de court-circuit selon la solution classique connue de la figure 1 est représentée en pointillés, et l'évolution de l'énergie délivrée par le courant de court-circuit selon la seconde solution connue de la figure 2 est représentée en trait mixte.

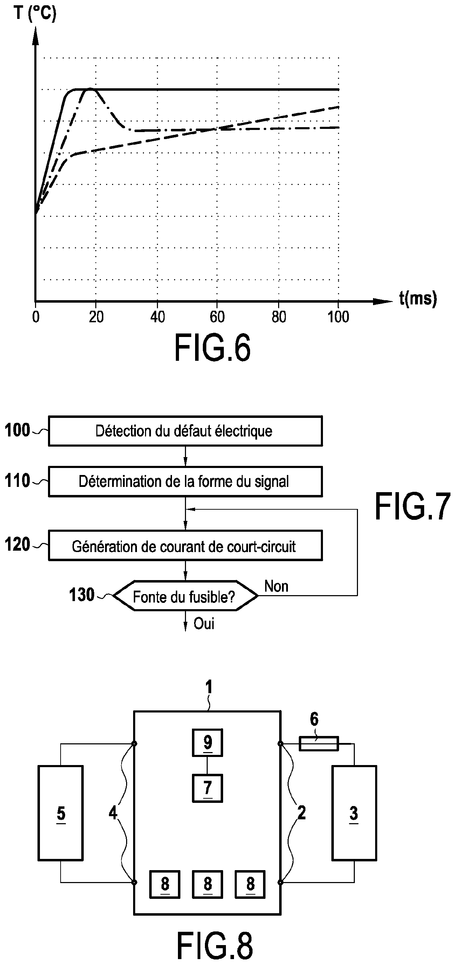

Comme cela est illustré sur la figure 6 qui est une représentation graphique comparant l'évolution de la température des semi-conducteurs de puissance de l'ASI, tels que des transistors IGBT, au cours du temps pour les deux solutions classiques des figures 1 et 2 et pour l'exemple de signal généré selon le mode de mise en œuvre de l'invention de la figure 3, la forme du signal selon l'invention permet de contrôler la montée en température des composants du dispositif d'alimentation de puissance et de maintenir la température en-dessous de la température limite.

Sur la figure 6, l'évolution de la température des semi-conducteurs de puissance de l'ASI au cours du temps pour le procédé selon l'invention est représentée en trait plein, l'évolution de la température des semi-conducteurs de puissance de l'ASI au cours du temps pour un procédé selon la solution classique connue de la figure 1 est représentée en pointillés, et l'évolution de la température des semi-conducteurs de puissance de l'ASI au cours du temps pour un procédé selon la seconde solution connue de la figure 2 est représentée en trait mixte.

Sur les figures 7 et 8 sont respectivement représentés un ordinogramme d'un procédé de génération d'un courant de court-circuit selon un mode de mise en œuvre de l'invention et un dispositif d'alimentation de puissance selon un mode de réalisation de l'invention.

Le dispositif d'alimentation de puissance est une alimentation sans interruption 1, notée ASI par la suite, comprenant des premières bornes de raccordement 2 couplées à une charge 3, des secondes bornes de raccordement 4 couplées à un réseau d'alimentation électrique 5, et une unité de commande de protection 7 configurée pour générer un courant de court-circuit destiné à provoquer la fonte d'un fusible 6 raccordé entre l'ASI 1 et la charge 3 lorsqu'un défaut électrique dans le circuit alimentant la charge 3 est détecté. L'ASI 1 comprend en outre pour son fonctionnement des composants électriques 8 tels que des transistors bipolaires à grille isolée, ou transistor IGBT.

Dans une étape préliminaire au procédé de génération du courant de court-circuit, un défaut électrique apparaît dans une portion du circuit électrique de l'ASI 1.

Dans une première étape 100 du procédé, le défaut électrique est détecté.

Dans une deuxième étape 110, l'unité de commande de protection 7 communique avec une mémoire 9 de l'ASI pour déterminer à partir d'une cartographie stockée dans la mémoire 9, la forme du signal de courant de court-circuit à délivrer au fusible 6 couplé en sortie de l'ASI 1, entre l'ASI 1 et la charge 3. La mémoire 9 peut être une partie mémoire d'un microprocesseur, le microprocesseur pouvant comprendre l'unité de commande de protection 7.

La cartographie est réalisée et stockée dans la mémoire 9 lors de la conception de l'ASI 1. La cartographie est déterminée à partir des caractéristiques de courant limite et d'inertie thermique de chacun des composants électriques 8 de l'ASI 1.

Dans une troisième étape 120, l'unité de commande de protection 7 commande la génération du courant de court-circuit en sortie de l'ASI 1 à laquelle est raccordée le fusible 6, le courant de court-circuit ayant une forme correspondant à celle de la figure 3.

Dans une quatrième étape 130, on vérifie si le fusible 6 a fondu, c'est-à-dire si le défaut électrique est isolé de la charge.

On continue de générer le courant de court-circuit selon la forme représentée sur la figure 3 au cours du temps tant que le fusible 6 n'a pas fondu.

Une fois le fusible 6 fondu, le procédé est interrompu, le défaut électrique étant isolé, c'est-à-dire l'ASI 1 étant isolé de la charge 3.

L'invention permet de maximiser le courant de court-circuit d'un onduleur, ou ASI, tout en régularisant l'amplitude du courant au court du temps en fonction de l'inertie thermique des composants.

## Revendications

1. Procédé de génération d'un courant de court-circuit par un dispositif d'alimentation de puissance (1) comportant des composants électriques (8) pour provoquer le déclenchement d'un élément de protection (6) raccordé entre une charge (3) et ledit dispositif d'alimentation de puissance (1),
dans lequel en réponse à la détection d'une situation de défaut électrique dans le dispositif d'alimentation de puissance (1), on génère (120) un courant de court-circuit alternatif,
**caractérisé en ce que** ledit courant de court-circuit alternatif a :
- pour une première période dudit signal une amplitude de courant égale à l'amplitude maximale de courant supportable par les composants électriques (8) dudit dispositif d'alimentation de puissance (1), et
- pour les périodes suivantes, une amplitude de courant décroissante en fonction de l'inertie thermique desdits composants électriques (8).

2. Procédé selon la revendication 1, dans lequel les périodes suivantes du signal de court-circuit alternatif présentent une forme de pseudo-signal carré avec des fronts montants et descendants et des extrema présentant une forme décroissante entre deux fronts en fonction de l'inertie thermique desdits composants électriques (8).

3. Procédé selon l'une des revendications 1 ou 2, comprenant, préalablement à la génération du courant de court-circuit, un accès (110) à une mémoire (9) comprenant une cartographie du courant de court-circuit à générer pour déclencher l'élément de protection (6).

4. Procédé selon la revendication 3, dans lequel la cartographie est préalablement réalisée à partir d'une détermination de la valeur d'intensité maximale de courant supportée par chacun des composants électriques (8) du dispositif d'alimentation de puissance (1) et d'une détermination de l'inertie thermique de chacun desdits composants électriques (8).

5. Procédé selon l'une des revendications 1 à 4, dans lequel l'élément de protection comprend un fusible (6) et le déclenchement de l'élément de protection comprend l'ouverture du fusible (6).

6. Procédé selon l'une des revendications 1 à 5, dans lequel la première période dudit signal présente une forme de signal carré.

7. Dispositif d'alimentation de puissance (1) comprenant des bornes de raccordement (2) à une charge (3), des bornes de raccordement (4) à un réseau d'alimentation électrique (5), des composants électriques (8) et une unité de commande de protection (7) configurée pour générer un courant de court-circuit destiné à provoquer le déclenchement d'un élément de protection (6) raccordé entre ladite charge (3) et ledit dispositif d'alimentation de puissance (1),
unité de commande de protection (7) étant configurée pour délivrer, en réponse à la détection d'une situation de défaut électrique dans le dispositif d'alimentation de puissance (1), un signal alternatif de courant de court-circuit,
**caractérisé en ce que** ledit courant de court-circuit alternatif a:
- pour une première période dudit signal une amplitude de courant égale à l'amplitude maximale de courant supportable par les composants électriques (8) dudit dispositif d'alimentation (1), et
- pour les périodes suivantes, une amplitude de courant décroissante en fonction de l'inertie thermique desdits composants électriques (8).

8. Dispositif d'alimentation de puissance (1) selon la revendication 7, comprenant en outre une mémoire (9) dans laquelle est enregistrée une cartographie du courant de court-circuit à générer pour déclencher l'élément de protection (6).

9. Dispositif d'alimentation de puissance (1) selon la revendication 8, dans lequel la cartographie est préalablement réalisée à partir d'une détermination de la valeur d'intensité maximale de courant supportée par chacun des composants électriques (8) du dispositif d'alimentation de puissance (1) et d'une détermination de l'inertie thermique de chacun desdits composants électriques (8).

10. Dispositif d'alimentation de puissance (1) selon l'une des revendications 7 à 9, dans lequel l'élément de protection comprend un fusible (6).

## Patentansprüche

1. Verfahren zur Erzeugung eines Kurzschlussstroms durch eine Leistungsversorgungseinrichtung (1) mit elektrischen Bauelementen (8), um das Auslösen eines Schutzelements (6), welches zwischen einer Last (3) und der Leistungsversorgungseinrichtung (1) angeschlossen ist, zu bewirken,
wobei als Reaktion auf das Erkennen einer elektrischen Fehlersituation in der Leistungsversorgungseinrichtung (1) ein Wechselkurzschlussstrom erzeugt wird (120),
**dadurch gekennzeichnet, dass** der Kurzschlussstrom folgendes aufweist:
- für eine erste Periode des Signals eine Stromamplitude, die gleich der maximalen Stromamplitude ist, welche die elektrischen Bauelemente (8) der Leistungsversorgungseinrichtung (1) aushalten können, und
- für die folgenden Perioden eine abnehmende Stromamplitude in Abhängigkeit von der thermischen Trägheit der elektrischen Bauelemente (8).

2. Verfahren nach Anspruch 1, bei dem die folgenden Perioden des Wechselkurzschlusssignals die Form eines Pseudo-Rechtecksignals mit steigenden und fallenden Flanken sowie Extrema mit einer abnehmenden Form zwischen zwei Flanken in Abhängigkeit von der thermischen Trägheit der elektrischen Bauelemente (8) aufweisen.

3. Verfahren nach einem der Ansprüche 1 oder 2, umfassend vor der Erzeugung des Kurzschlussstroms einen Zugriff (110) auf einen Speicher (9) mit einer Abbildung des zu erzeugenden Kurzschlussstroms, um das Schutzelement (6) auszulösen.

4. Verfahren nach Anspruch 3, bei dem die Abbildung zuvor anhand einer Bestimmung des maximalen Stromstärkewertes, der von jedem der elektrischen Bauelemente (8) der Leistungsversorgungseinrichtung (1) ausgehalten wird, und einer Bestimmung der thermischen Trägheit von jedem der elektrischen Bauelemente (8) erstellt wird.

5. Verfahren nach einem der Ansprüche 1 bis 4, bei dem das Schutzelement eine Sicherung (6) umfasst und das Auslösen des Schutzelements das Öffnen der Sicherung (6) umfasst.

6. Verfahren nach einem der Ansprüche 1 bis 5, bei dem die erste Periode des Signals die Form eines Rechtecksignals aufweist.

7. Leistungsversorgungseinrichtung (1), umfassend Anschlüsse zum Anschließen (2) an eine Last (3), Anschlüsse zum Anschließen (4) an ein Stromversorgungsnetz (5), elektrische Bauelemente (8) sowie eine Schutzsteuereinheit (7), welche dazu ausgelegt ist, einen Kurzschlussstrom zu erzeugen, der dazu bestimmt ist, das Auslösen eines Schutzelements (6), welches zwischen der Last (3) und der Leistungsversorgungseinrichtung (1) angeschlossen ist, zu bewirken,
deren Schutzsteuereinheit (7) dazu ausgelegt ist, als Reaktion auf das Erkennen einer elektrischen Fehlersituation in der Leistungsversorgungseinrichtung (1) ein Kurzschlussstrom-Wechselsignal zu liefern,
**dadurch gekennzeichnet, dass** der Kurzschlussstrom folgendes aufweist:
- für eine erste Periode des Signals eine Stromamplitude, die gleich der maximalen Stromamplitude ist, welche die elektrischen Bauelemente (8) der Leistungsversorgungseinrichtung (1) aushalten können, und
- für die folgenden Perioden eine abnehmende Stromamplitude in Abhängigkeit von der thermischen Trägheit der elektrischen Bauelemente (8).

8. Leistungsversorgungseinrichtung (1) nach Anspruch 7, ferner umfassend einen Speicher (9), in dem eine Abbildung des zu erzeugenden Kurzschlussstroms gespeichert ist, um das Schutzelement (6) auszulösen.

9. Leistungsversorgungseinrichtung (1) nach Anspruch 8, bei der die Abbildung zuvor anhand einer Bestimmung des maximalen Stromstärkewertes, der von jedem der elektrischen Bauelemente (8) der Leistungsversorgungseinrichtung (1) vertragen wird, und einer Bestimmung der thermischen Trägheit von jedem der elektrischen Bauelemente (8) erstellt wird.

10. Leistungsversorgungseinrichtung (1) nach einem der Ansprüche 7 bis 9, bei der das Schutzelement eine Sicherung (6) umfasst.

## Claims

1. A method of generating a short-circuit current by a power supply device (1) having electrical components (8) and for the purpose of tripping a protection element (6) connected between a load (3) and said power supply device (1),
wherein in response to detecting an electrical fault situation in the power supply device (1), an AC short-circuit current is generated (120), **characterized in that** said AC short-circuit current has:
- for a first period of said signal, a current amplitude equal to the maximum current amplitude that can be withstood by the electrical components (8) of said power supply device (1); and
- for the following periods, a current amplitude that decreases as a function of the thermal inertia of said electrical components (8).

2. A method according to claim 1, wherein the following periods of the AC short-circuit signal present a pseudo-square waveform with rising and falling fronts and with extrema between two fronts presenting a decreasing waveform as a function of the thermal inertia of said electrical components (8).

3. A method according to claim 1 or claim 2, comprising, prior to generating the short-circuit current, accessing (110) a memory (9) including a chart of the short-circuit current to be generated in order to trip the protection element (6).

4. A method according to claim 3, wherein the chart is drawn up beforehand by determining the maximum current value that can be withstood by each of the electrical components (8) of the power supply device (1) and by determining the thermal inertia of each of said electrical components (8).

5. A method according to any one of claims 1 to 4, wherein the protection element comprises a fuse (6), and tripping the protection element comprises opening the fuse (6).

6. A method according to any one of claims 1 to 5, wherein the first period of said signal presents a square waveform.

7. A power supply device (1) comprising terminals (2) for connection to a load (3), terminals (4) for connection to an electricity power supply network (5), electrical components (8), and a protection control unit (7) configured to generate a short-circuit current for causing a protection element (6) that is connected between said load (3) and said power supply device (1) to trip,
the protection control unit (7) being configured to respond to an electrical fault situation being detected in the power supply device (1) by delivering an AC short-circuit signal, **characterized in that** said AC short-circuit current has:
- for a first period of said signal, a current amplitude equal to the maximum current amplitude that can be withstood by the electrical components (8) of said power supply device (1); and
- for the following periods, a current amplitude that decreases as a function of the thermal inertia of said electrical components (8).

8. A power supply device (1) according to claim 7, further comprising a memory (9) storing a chart of the short-circuit current to be generated in order to trip the protection element (6).

9. A power signal device (1) according to claim 8, wherein the chart is made beforehand by determining the maximum current value that can be withstood by each of the electrical components (8) of the power supply device (1) and by determining the thermal inertia of each of said electrical components (8).

10. A power supply device (1) according to any one of claims 7 to 9, wherein the protection element comprises a fuse (6).
